Europäisches Patentamt

European Patent Office

Office européen des brevets

(11) Numéro de publication: **0 279 132 B1**

## (12) FASCICULE DE BREVET EUROPEEN

(45) Date de publication de fascicule du brevet: **08.04.92**   (51) Int. Cl.5: **G11B 5/592**, G11B 21/08

(21) Numéro de dépôt: **87402849.1**

(22) Date de dépôt: **15.12.87**

(54) **Dispositif pour la détection de la position d'une pluralité de têtes magnétiques.**

(30) Priorité: **19.12.86 FR 8617789**

(43) Date de publication de la demande:
**24.08.88 Bulletin 88/34**

(45) Mention de la délivrance du brevet:
**08.04.92 Bulletin 92/15**

(84) Etats contractants désignés:
**AT BE CH DE ES GB GR IT LI LU NL SE**

(56) Documents cités:
**EP-A- 0 197 663
GB-A- 1 580 008
GB-A- 2 021 891
US-A- 4 183 060
US-A- 4 471 392**

**RESEARCH DISCLOSURE, no. 264, avril 1986,
pages 214,215, résumé no. 26457, Emsworth,
Hampshire, GB; "Slider assembly with dynamically positionable transducer"**

**RESEARCH DISCLOSURE, no. 206, juin 1981,
pages 242,243, résumé no. 20638, Havant,
Hampshire, GB; "Capacitive height control
for maintaining a magnetic head closely
spaced from a magnetic layer"**

**IBM TECHNICAL DISCLOSURE BULLETIN, vol.
26, no. 6, novembre 1983, pages 2942-2946,
New York, US; K.B. KLAASSEN: "Capacitive
servo detector"**

(73) Titulaire: **SCHLUMBERGER INDUSTRIES
50, avenue Jean Jaurès
F-92120 Montrouge(FR)**

(72) Inventeur: **Monard, Paul
23bis, Avenue du Général Leclerc
F-92340 Bourg-La-Reine(FR)**

(74) Mandataire: **Dupont, Henri
Schlumberger Industries Centre de
Recherche/SMR B.P. 620-05
F-92542 Montrouge Cédex(FR)**

EP 0 279 132 B1

## Description

La présente invention concerne un dispositif pour la détection de la position d'une tête d'enregistrement/lecture, par exemple magnétique, et trouve application dans le domaine des appareils pour l'enregistrement et/ou la lecture d'informations par une tête devant laquelle défile une bande-support d'informations, telle qu'une bande magnétique.

Elle s'applique aux appareils d'enregistrement/lecture, de type connu appelé "à têtes tournantes", dans lesquels la bande est enroulée hélicoïdalement selon un Ω ou un α (en vue de dessus) autour d'un tambour cylindrique comprenant une fente médiane disposée dans un plan équatorial et à l'intérieur de laquelle tourne un élément en forme de disque portant sur sa périphérie un ensemble de têtes magnétiques, dépassant légèrement de la paroi du tambour; le déplacement des têtes en rotation et de la bande en translation fait que les informations sont disposées sur la bande selon des segments de pistes parallèles, inclinés par rapport à l'axe longitudinal de la bande.

L'inclinaison des pistes sur la bande est fonction de la vitesse relative tête/bande. Les informations enregistrées sur la bande doivent donc être lues avec la même vitesse relative qu'à l'enregistrement, faute de quoi les têtes ne suivent plus les pistes qui sont disposées sur la bande selon une inclinaison constante normalisée. Afin d'obtenir une vitesse relative identique entre l'enregistrement et la lecture, on fait varier la vitesse de bande et/ou la vitesse de rotation des têtes, et/ou la position axiale de la tête par rapport à la bande, de part et d'autre du plan équatorial de rotation du disque rotatif.

Or, le déplacement axial de la tête afin de la placer dans une position donnée par rapport à la bande, nécessite de connaître à tout instant et de façon précise, la position effective de la tête, afin d'asservir à la position réelle les moyens de déplacement de la tête, constitués par exemple d'un bilame piézoélectrique encastré et dont l'extrêmité libre porte la tête.

Il existe à ce jour plusieurs dispositifs destinés à la détection de la position d'une tête magnétique d'un appareil d'enregistrement/lecture.

Selon un premier dispositif de détection connu, tel que décrit par exemple dans la demande de brevet français N° 2.458.125, des jauges de contrainte, disposées sur une lame piézoélectrique portant la tête, permettent de détecter et mesurer la déformation de ce dernier, et donc la position de la tête.

Ce dispositif est relativement complexe de réalisation compte-tenu de la difficulté de disposer des jauges sur les lames.

Par ailleurs, on connait par la demande de brevet français N° 2.512.247, un dispositif disposé à l'intérieur du disque tournant portant les têtes, et comprenant une bobine solidaire du disque entourant un noyau en ferrite solidaire de la tête ; la bobine est reliée à une capacité de manière à constituer un circuit oscillant dont la fréquence d'oscillation est déterminée par la position du noyau dans la bobine, donc de la position de la tête par rapport au disque tournant.

Ce dispositif présente un encombrement relativement important, et oblige à prévoir une hauteur du disque tournant relative grande, avec les difficultés et contraintes mécaniques qui en découlent.

La demande de brevet français N° 2.427.660 décrit un dispositif pour la commande en position d'un élément piézoélectrique tenant compte de l'effet de l'hystérésis, comportant une branche d'oscillation dans laquelle ledit élément est utilisé lui-même comme capacité.

Ce dispositif connu est relativement complexe eu égard au circuit électronique nécessaire.

On a également proposé, de façon connue, un autre type de dispositif (voir par exemple la demande de brevet français N° 2.345.050), dans lequel on détecte les déformations et vibrations d'un bilame piézoélectrique (portant la tête) grâce au signal électrique délivré par ce dernier par suite de l'effet inverse piézoélectrique; le bilame comprend à sa partie supérieure une première couche conductrice destinée à commander de déformation du bilame, et une seconde couche conductrice (séparée de la première par une couche de diélectrique) pour le "générateur" de signaux représentatifs de la déformation.

Cette forme de réalisation connue entraîne une construction complexe du bilame.

La demande de brevet français N° 2.344.912 montre un dispositif assurant la correction d'alignement entre la tête principale d'enregistrement/lecture et les pistes sur la bande, grâce à deux têtes de détection latérales, disposées de part et d'autre de la tête principale sur le même bilame piézoélectrique ; la différence des amplitudes des signaux détectés par ces têtes latérales fournit une indication de la position de la tête principale par rapport aux pistes.

Ce dispositif antérieur nécessite l'adjonction de deux têtes magnétiques, ce qui, non seulement augmente le coût, mais surtout conduit à des difficultés de montage et à un encombrement important.

En outre, la plupart des dispositifs connus mentionnés ci-dessus ont en commun l'inconvénient de ne fournir qu'une mesure relative, puisque effectuée par référence à l'élément porteur de la tête lui-même. De plus, ces dispositifs antérieurs obligent à prévoir des liaisons électriques supplémentaires entre la partie fixe du tambour et le disque tournant, ce qui augmente le coût et l'encombrement de l'appareil d'enregistrement/lecture.

On comprend que le besoin se fasse sentir d'un dispositif de détection de la position axiale d'une tête tournante d'enregistrement/lecture défilant devant une bande, qui soit simple et peu encombrant (ceci est important dans la mesure où les têtes et leurs organes de commande sont disposés dans un espace réduit où la place est comptée), et permettant d'effectuer une mesure absolue, c'est-à-dire en référence à un élément fixe, afin d'augmenter la précision et la fiabilité de la mesure.

On connait également, d'après le brevet anglais No. 1 580 008 un appareil d'enregistrement/lecture à une seule tête tournante, à laquelle est associé un capteur de position à capacité électrique variable ; ce capteur est formé de deux électrodes : l'une fixe, et l'autre mobile, solidaire du support de la tête tournante.

Ce dispositif antérieur, généralisé à un appareil d'enregistrement/lecture à plusieurs têtes tournantes, conduit à des difficultés de montage liées à la connectique, et par conséquent à un encombrement important.

Par ailleurs, on connait, dans une application différente, relative à un appareil d'enregistrement/lecture sur disques du type vidéo, par exemple par le brevet US N° 3.783.196, un dispositif dans lequel une tête de lecture suit par contact un sillon en spirale prévu dans le disque, les inégalités de hauteur variable disposées au fond du sillon constituant l'information; le dispositif détecte la hauteur variable séparant le sommet des inégalités et la tête qui reste, elle, à hauteur constante. la détection repose sur le principe de variation de capacité entre une première électrode solidaire de la tête et une seconde électrode reliée au plateau tourne-disque.

En outre, le brevet US N° 4.183.060 décrit un appareil d'enregistrement/lecture optique sur disque du type vidéo, comprenant une sonde capacitive dont la première électrode est solidaire d'une lentille que l'on désire maintenir à une distance constante du disque portant la seconde électrode, et ce malgré les déplacements axiaux de la surface du disque lorsque ce dernier est en rotation; il est prévu deux circuits résonants dont la somme des signaux de sortie fournit un signal d'erreur de position.

Ces deux derniers dispositifs connus, outre leur relative complexité résultant de l'utilisation de circuits électroniques à oscillateur pour exploiter un signal de sortie en fréquence, sont relatifs à un domaine où le problème que l'on cherche à résoudre se pose en des termes différents de celui du domaine de l'enregistrement/lecture sur bande.

En effet, les dispositifs respectifs diffèrent notamment par la nature du support d'informations, à savoir d'un coté une bande souple, non disposée dans un plan, et sur laquelle les informations sont portées par des pistes immatérialisables mécaniquement, et de l'autre coté un disque rigide plan sur lequel les informations sont repérables par le sillon.

De plus, les utilisations respectives sont différentes; le dispositif du brevet US 4.183.060 réalise un mesure "de zéro" qui ne concerne que des variations minimes d'écart de la tête autour d'une position fixe de référence, et le dispositif du brevet US 3.783.196 réalise une mesure liée au signal portant l'information elle-même, alors que pour l'enregistrement/lecture sur bande, on s'interèsse à la position absolue de la tête susceptible de varier dans une plage relativement grande.

La présente invention remédie aux inconvénients précités de l'art antérieur et propose un dispositif de détection d'encombrement réduit et de conception simple.

A cette fin, selon l'invention, le dispositif pour détecter la position d'une pluralité de têtes tournantes comprend les éléments décrits dans la revendication 1.

Ainsi, le dispositif selon l'invention procure, de façon simple et peu emcombrante, une mesure des déplacements axiaux des têtes tournantes ; de plus, la mesure est absolue.

Selon un aspect de l'invention, le support est formé d'un bilame piézoélectrique dont une face constitue l'armature mobile du condensateur variable.

La technique de déplacement axial de têtes par bilame piézoélectrique est largement utilisée dans le domaine des têtes tournantes. L'invention se prête particulièrement bien à ce mode de réalisation, car aucune adjonction d'électrode sur le transducteur n'est alors nécessaire et l'on supprime ainsi les contraintes d'encombrement et d'isolation électrique liées à une telle adjonction.

De plus, avantageusement, en transmettant les signaux appliqués à l'armature mobile ou reçus de cette dernière par les moyens de transmission du signal de fléchissement du bilame, on évite l'adjonction de liaisons électriques supplémentaires .

Dans le but d'obtenir une mesure fiable et la moins sensible possible aux signaux parasites, on réalise une démodulation synchrone en amplitude d'un signal électrique alternatif d'entrée "porteur", engendré par un générateur relié d'une part à l'une des entrées de moyens de démodulation dont l'autre entrée est reliée à l'une des armatures de la capacité variable, et d'autre part à l'autre armature de cette dernière par l'intermédiaire d'un amplificateur.

Conformément à un exemple de réalisation simple, l'armature fixe est constituée d'une couche métallique annulaire, coaxiale au tambour, et disposée sur l'une des faces inférieure ou supérieure de la fente, et en regard du trajet du support tournant.

Selon une première forme de réalisation, le générateur engendre autant de signaux de détection de fréquences différentes qu'il y a de support de têtes (tels que des bilames piézoélectriques) et appliqués chacun à un support respectif, les moyens de démodulation comprenant un circuit de démodulation pour chaque support. Ainsi, à chaque capacité variable (c'est-à-dire à chaque support) correspond une "fréquence porteuse" donnée.

Selon un autre mode de réalisation, le générateur engendre un signal porteur de fréquence donnée et est relié à l'armature fixe, les moyens de démodulation comprenant autant de circuits de démodulation que de supports.

De préférence, selon cet autre mode dans le cas où les signaux appliqués à, ou reçus de l'armature mobile, sont transmis par les moyens de transmission du signal de fléchissement du support, et sont de fréquence différente de ce dernier, les moyens de mesure comprennent un circuit de multiplexage en fréquence permettant de transmettre, via les moyens de transmission du signal de fléchissement, dans un sens le signal de fléchissement vers le support, et dans le sens inverse le signal de sortie issu de l'armature mobile et contenant l'information de position de cette dernière vers le circuit de démodulation correspondant.

Cette variante présente une grande simplicité tant sur le plan mécanique que sur le plan électronique.

Avantageusement, chaque circuit de démodulation comprend un amplificateur relié à une entrée d'un multiplieur dont l'autre entrée reçoit le signal d'entrée porteur et dont la sortie attaque un filtre passe-bas relié lui-même à un inverseur.

De préférence, les moyens de mesure comprennent un circuit déphaseur de 90° auquel est appliqué le signal d'entrée porteur ou le signal de sortie modulé.

Afin de tenir compte des variations de la permitivité de l'air ambiant, le dispositif comprend un circuit de correction, comportant une capacité de référence placée au voisinage de la capacité variable de mesure, ledit circuit étant relié auxdits moyens de mesure de manière à délivrer un signal de correctioin appliqués à ces derniers.

Préférentiellement, le dispositif selon l'invention est incorporé dans un circuit d'asservissement reliant les moyens de commande et le support de têtes.

L'invention sera bien comprise à la lumière des dessins annexés, dans lesquels :
- La figure 1 est une vue schématique en perspective d'une bande enroulée selon un Ω autour d'un tambour ;
- La figure 2 est une vue de dessus de l'ensemble de la figure 1 ;
- Les figures 3 et 4 montrent schématiquement en perspective deux modes de réalisation respectifs de l'invention ;
- La figure 5 montre un schéma d'un bilame;
- La figure 6A est un schéma électrique équivalent du montage de la figure 4 ;
- La figure 6B est un schéma électrique équivalent à celui de la figure 6A, pour un signal porteur de fréquence de 250 kHz ;
- La figure 7 est un schéma synoptique d'un circuit de démodulation associé à une capacité variable ;
- La figure 8 montre en perspective le mode de réalisation de la figure 4 auquel est ajouté le circuit de correction de permitivité ;
- La figure 9 est un schéma synoptique montrant la relation des circuits de démodulation respectifs des capacités variables de mesure et de la capacité de référence ; et
- La figure 10 est un schéma montrant une boucle d'asservissement incorporant le capteur selon l'invention.

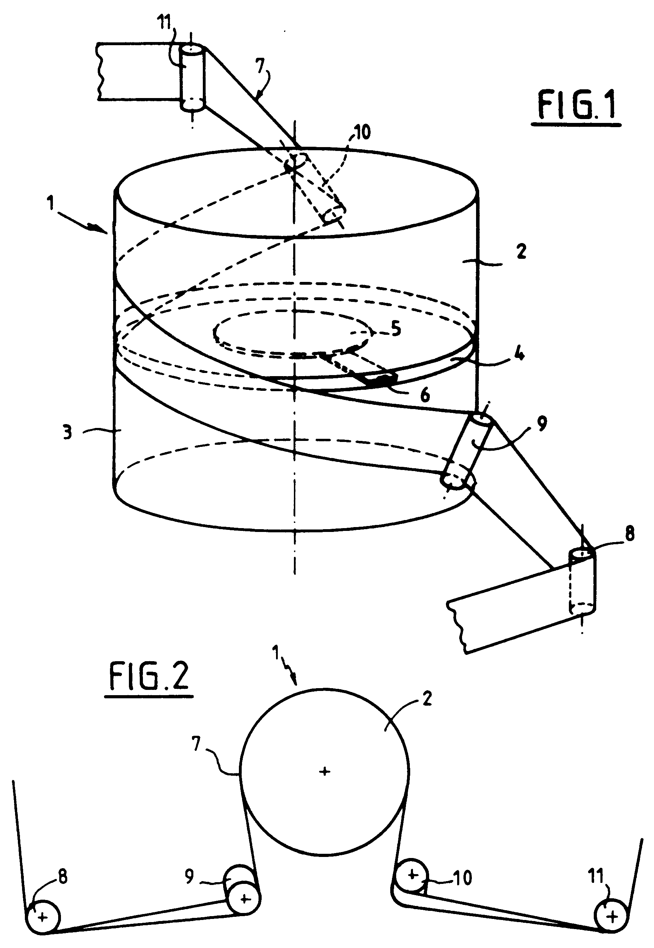

La dispositif de la présente invention est décrit ci-après en relation avec un exemple d'application au domaine des appareils d'enregistrement/lecture à têtes magnétiques tournantes, du type connu en soi et tels que représenté schématiquement sur les figures 1 et 2.

Un tambour cylindrique 1 comprend une partie supérieure 2 et inférieure 3 séparées par une fente 4 sensiblement disposée dans un plan équatorial perpendiculaire à l'axe du tambour et à mi-hauteur de ce dernier. Dans cette fente, est prévu un élément en forme de disque 5 susceptible d'être animé d'un mouvement rotatif autour de l'axe du tambour; le disque est porteur d'une et généralement plusieurs têtes magnétiques 6 disposées régulièrement sur sa périphérie et faisant très légèrement saillie par rapport à la surface définissant la paroi du tambour. Une bande magnétique 7 est susceptible de s'enrouler hélicoïdalement autour du tambour 1, pour former, en vue de dessus comme montré sur la figure 2, un Ω. Un ensemble de galets 8 à 11 guident la bande 7 et la maintiennent selon cette configuration pendant son défilement, depuis une bobine débitrice vers une bobine réceptrice (non représentées et connues en elles-mêmes). Les informations sont enregistrées/lues sur la bande selon des segments de pistes parallèles et obliques par rapport à l'axe de la bande.

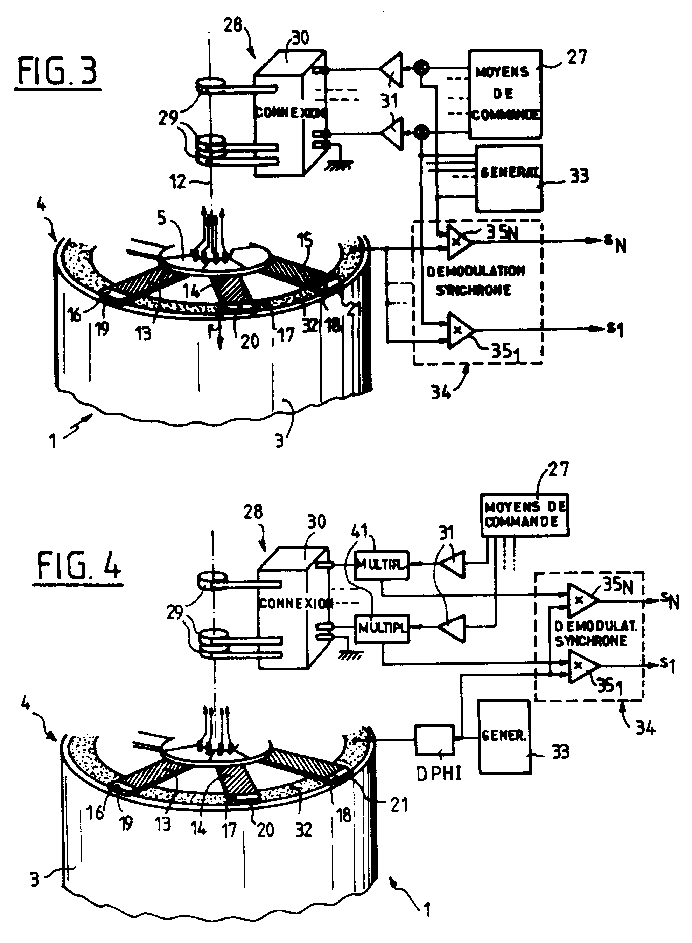

Sur les figures 3 et 4 sont représentés schématiquement deux modes de réalisation de l'invention, dans lesquels les éléments similaires portent la même référence d'une figure à l'autre. Seule la partie inférieure 3 du tambour 1 est représentée pour plus de clarté.

Dans la fente médiane 4 séparant les deux parties du tambour, est monté à rotation, autour de l'axe 12 du tambour, un élément en forme de disque 5 portant une pluralité de supports allongés 13, 14, 15 disposés radialement et répartis angulairement (de préférence de façon régulière). Le dispositif comporte par exemple six ou huit supports, dont seuls les supports 13, 14, et 15 sont visibles sur les figures 3 et 4. Chaque support est pourvu à son extrémité libre, c'est-à-dire l'extrémité distale par rapport à l'axe 12, d'une patte respectivement 16, 17, 18. Sur chaque patte est fixée une tête magnétique respectivement 19, 20 et 21 de façon que celles-ci fassent légèrement saillie radialement par rapport à la surface extérieure du tambour, afin de venir en contact avec la bande enroulée sur le tambour. Ainsi, il est prévu un support par tête.

Les têtes magnétiques sont susceptibles d'être déplacées suivant une direction axiale, transversale à leur plan de rotation et transversalement à l'axe de la bande (c'est-à-dire parallèle à l'axe 12 du tambour) et symbolisée par la flèche f, afin de suivre les pistes parallèles inclinées portant les informations sur la bande.

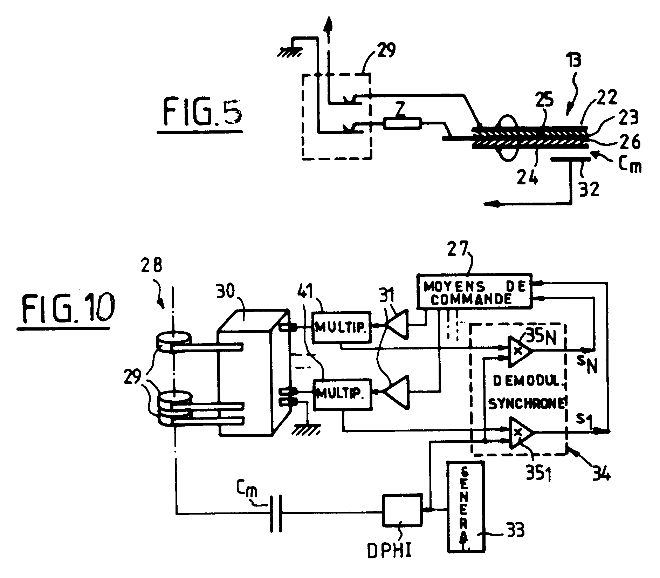

De manière connue, le mouvement axial de chaque tête est réalisé par le fléchissement, suivant cette même direction, du support correspondant. A cette fin, et conformément à l'exemple des figures, chaque support est constitué d'un bilame piézoélectrique. Chaque bilame (comme montré sur la figure 5) comprend trois couches conductrices parallèles 22, 23, 24 séparées deux à deux par une lamelle 25, 26 en matériau piézoélectrique; la couche centrale 23 est reliée à la masse par une impédance Z, tandis que les couches supérieure et inférieure 22, 24 sont reliées entre elles et recoivent un signal de fléchissement, de manière que les lamelles superposées subissent, sous l'effet dudit signal, respectivement un allongement et un raccourcissement, provoquant le fléchissement du bilame.

Chaque bilame reçoit un signal de fléchissement, engendré par des moyens de commande 27, et transmis de façon connue audit bilame par l'intermédiaire d'un ensemble de transmission 28 comportant des contacts tournants 29 (en nombre égal au nombre de bilames plus un), un circuit de connection 30, et des amplificateurs haute tension 31. A titre indicatif, les signaux de fléchissement peuvent avoir une fréquence de l'ordre de 60 à 500 Hz et une amplitude de 100 à 200 Volts.

Il est maintenant décrit ci-après en détail, les exemples représentés aux dessins du dispositif selon l'invention, permettant de connaître à chaque instant la position axiale réelle occupée par chaque tête magnétique.

Le dispositif selon l'invention comporte, pour chaque bilame, un capteur de position à capacité variable pourvu d'une armature mobile par rapport à une armature fixe, constituant une référence pour la détection de la position axiale du bilame.

L'armature mobile est constituée par le bilame piézoélectrique lui-même, et plus précisément par l'une des faces métalliques externes de celui-ci, tandis que l'armature fixe 32 est constituée d'une couche conductrice plane annulaire, centrée sur l'axe 5 du tambour, et disposée sur l'une des sections droites inférieure ou supérieure du tambour faisant face à la fente 4 (cf. figures 3 et 4). Ainsi, pendant leur rotation, les bilames 13, 14 et 15 sont toujours en regard de la couche conductrice annulaire 32 constituant l'armature fixe.

On comprend que tout fléchissement axial d'un bilame, sous l'effet d'un signal de fléchissement donné, entraine son écartement ou son rapprochement de l'armature annulaire fixe 32, et modifie donc la capacité de mesure variable $C_m$ formée par ces armatures.

Il est à noter que l'armature fixe 32 est commune à toutes les capacités variables $C_m$ formées par l'association bilame/armature fixe. Sur les figures 3 et 4, la couche annulaire 32 est disposée sur la section droite inférieure du tambour faisant face à la fente; elle se trouve donc en regard de la face inférieure conductrice de chaque bilame ; en variante, la couche annulaire 32 peut être fixée sur la section droite supérieure du tambour, de manière à être disposée au dessus des bilames.

Sont décrits ci-après les moyens de mesure associés à chaque capteur à capacité variable, autrement dit à chaque couple bilame/armature fixe, et destinés à permettre la mesure de la capacité de mesure $C_m$ ainsi formée.

Le dispositif selon l'invention repose sur le principe de la mesure de l'amplitude d'un signal modulé en amplitude, soumis à une démodulation synchrone, afin de réduire l'influence de signaux parasites. On injecte à l'une des armatures un signal d'entrée alternatif, dit de détection par opposition au signal de fléchissement, et également appelé ci-après signal d'entrée porteur, et dont la fréquence "$f_p$" joue le rôle

de fréquence porteuse, soit $V = V_p \sin 2 \pi f_p t$. Un signal électrique alternatif d'entrée est appliqué à une armature de la capacité de mesure et l'on reçoit sur l'autre armature un signal de sortie modulé, ladite autre armature étant reliée à la masse par une impédance résistive appelée Z. Chaque capacité de mesure Cm est constituée d'un bilame et de l'armature fixe de référence 32.

Le signal de détection de sortie (ou encore signal de sortie modulé par opposition à un signal d'entrée porteur) présente un amplitude (avec $2 \pi f_p = w_p$):

$$V_s = \frac{Z}{Z + \dfrac{1}{C_m \, w_p}} \times V_p \qquad \text{(formule 1)}$$

Cm étant fonction de "d", distance séparant les armatures de chaque capacité, $V_s$ est de la forme

$V_s = f(d) \, V_p$     (formule 2).

où f(d) est la fonction de "d" visée à la formule 1.

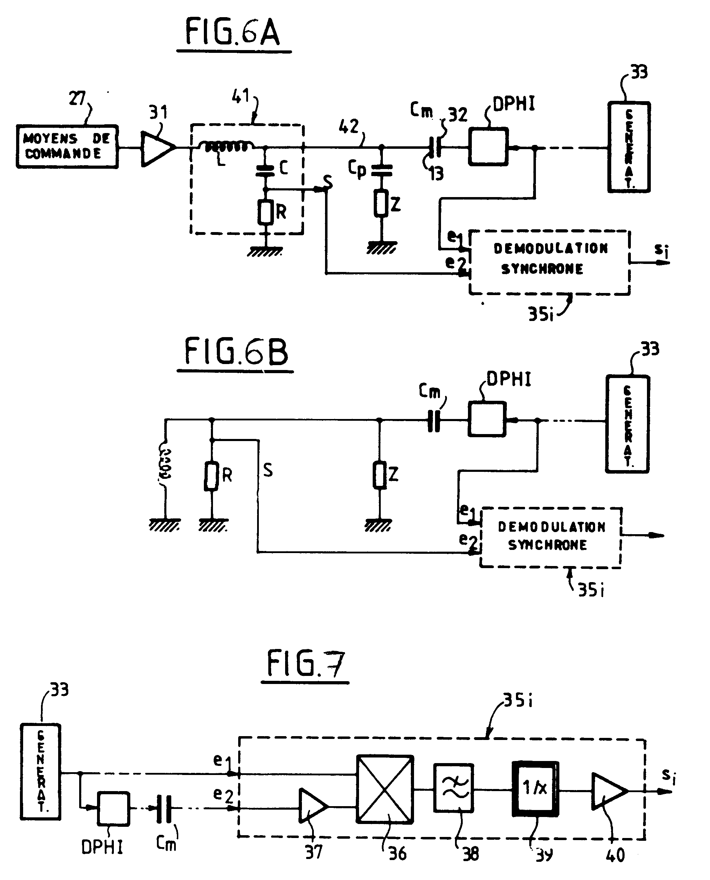

La mesure de l'amplitude du signal de sortie permet de calculer la valeur de "d" représentative de la position de la tête magnétique. En se référant aux figures 3 à 5 et 7, les moyens de mesure comprennent un générateur 33 engendrant un signal d'entrée porteur appliqué à l'une des armatures, et des moyens de démodulation 34 recevant sur une entrée le signal d'entrée porteur et dont l'autre entrée reçoit le signal de sortie modulé issu de l'autre armature. Les moyens de démodulation 34 comportent un circuit de démodulation $35_1$, ..., $35_N$ pour chaque bilame ; chaque circuit de démodulation $35_i$ ($i = 1,..,N$) comprend (cf figure 7) un multiplieur 36 à deux entrées ($e_1$ et $e_2$) reliées respectivement au générateur $33_i$ et par un amplificateur 37, à l'une des armatures du condensateur variable de mesure $C_m$ ; la sortie du multiplieur 36 est appliquée à un filtre passe-bas 38 dont la sortie est reliée à un inverseur analogique 39, dont la fonction est de délivrer un signal de sortie inverse du signal d'entrée, lui-même suivi d'un amplificateur 40 ; la sortie $s_i$ délivre un signal final représentatif de la position du bilame par rapport à l'armature fixe annulaire 32. De préférence, chaque signal final est appliqué aux moyens de commande 27 afin de réaliser une boucle de contre-réaction, comme montré sur la figure 10.

Les figures 3 et 4 montrent deux formes respectives de réalisation dont les particularités propres sont ci-après décrites.

Dans la première forme de réalisation, montrée sur la figure 3, le générateur 33 engendre N signaux d'entrée porteurs (N étant le nombre de bilames) de fréquences porteuses différentes qui sont appliqués à chacun des N bilames, qui reçoivent aussi le signal de fléchissement issu des moyens de commande 27, par l'intermédiaire des amplificateurs haute tension 31, des circuits de connection 30 et des contacts tournants 29. Les N signaux d'entrée porteurs sont également appliqués respectivement à une première entrée de chaque circuit de démodulation $35_1, 35_N$, dont la seconde entrée reçoit les N signaux de sortie modulé provenant de l'armature fixe annulaire 32. A titre indicatif, les N fréquences porteuses sont de l'ordre de quelques centaines de kHz.

Dans une seconde forme de réalisation, montrée sur la figure 4, le générateur 33 engendre des signaux d'entrée porteurs, de fréquence unique, appliqués à la première entrée de chaque circuit 34 et à l'armature annulaire fixe 32 par l'intermédiaire d'un déphaseur DPHI de 90°. Les signaux de sortie, issus de chaque armature mobile (chaque bilame) sont transmis à la seconde entrée 21 de chaque circuit $34_i$, via les contacts tournants 29 et le circuit connection 30, par l'intermédiaire de circuits de multiplexage 41 dont la fonction est décrite ci-après. Ainsi, les signaux de fléchissement issus de moyens de commande 27 sont transmis vers les bilames dans un sens, tandis que les signaux de détection, de sortie à la fréquence porteuse modulée, sont transmis depuis les bilames dans le sens inverse.

Cette seconde forme de réalisation présente un compromis optimal par sa simplicité de réalisation tant sur le plan mécanique qu'électronique et évite la transmission simultanée de plusieurs signaux différents (de fléchissement d'une part et de détection d'autre part) sur la même ligne.

Le multiplexage en fréquence par le circuit 41 est décrit ci-après en référence aux figures 6A et 6B montrant chacune un schéma électronique correspondant au dispositif de la figure 4 et pour une capacité

de mesure $C_m$, c'est-à-dire un bilame. Il est entendu qu'à chaque bilame correspond un montage tel que représenté à la figure 6A, à l'exception des moyens de commande 27 et du générateur 33, communs à tous les bilames.

En référence à la figure 6A, la capacité de mesure $C_m$ reçoit sur une première armature, correspondant à l'armature fixe 32, par l'intermédiaire d'un déphaseur DPHI, un signal d'entrée porteur issu du générateur 33 ; la seconde armature de la capacité $C_m$, correspondant à l'armature mobile (le bilame 13) est reliée d'une part à un circuit de multiplexage en fréquence 41 par une ligne 42, et d'autre part à une branche reliée à la masse comprenant une capacité $C_p$ (représentative de la capacité propre du bilame et valant environ 10 nF) et une impédance Z ; le circuit 41 est constitué d'une bobine L recevant, par l'amplificateur haute tension 31, le signal de fléchissement issu des moyens de commande 27, et reliée à un filtre R/C dont le point milieu, délivrant le signal modulé, est relié à une première entrée du circuit de démodulation $35_i$ ; la seconde entrée de ce dernier est reliée au générateur 33. On suppose que le signal de fléchissement a une fréquence de 500 Hz et une tension d'environ 150 Volts et le signal de détection porteur une fréquence de 250 kHz. A titre indicatif, L = 10 mH , R = 10 KΩ, C = 680 pF et Z = 10KΩ.

La bobine L présente une impédance faible à 200 Hz et une impédance forte à 250 kHz. Le signal de fléchissement à relative haute tension ne parvient pas au circuit $35_i$ grâce au filtre RC. A noter que l'impédance Z évite à la ligne 42 d'être reliée à la masse.

La figure 6B est un schéma équivalent de celui de la figure 7A à la fréquence du signal de détection porteur de 250 kHz. C et $C_p$ sont considérés comme des court-circuits, car les termes correspondants 1/C w et $1/C_p$ w sont négligeables devant respectivement R et Z ; la bobine L est ramenée à la masse et présente une impédance grande devant R en parallèle sur Z (R \\ Z). Soit $Z_{eq}$ = R \\ Z, le signal de sortie modulé "V", provenant de l'armature mobile (bilame) et délivré à sortie du circuit 41, est de la forme

$$V = \frac{Z_{eq}}{Z_{eq} + \dfrac{1}{C_m \, w_p \, j}} \, A_p \sin w_p \, t \qquad (formule \ 3)$$

où $w_p$ correspond à la fréquence du signal d'entrée porteur et $A_p$ est l'amplitude du signal porteur ; en faisant l'hypothèse que $Z_{eq} \, C_m \, w_p < < 1$. (Compte tenu des valeurs respectives de ces grandeurs) on obtient un signal de sortie modulé

$$v = Z_{eq} \, C_m \, j \, w_p \, A_p \sin W_p t \qquad (formule \ 4)$$

qui est injecté dans le circuit $35_i$ ; son amplitude est

$$A(v) = Z_{eq} \, C_m \, w_p \, A_p = Z_{eq} \, w_p \, A_p \, \epsilon \, S \, / \, d \qquad (formule \ 5)$$

avec

$\epsilon$ : permitivité de l'air

S : surface des armatures en regard

d : distance séparant les armatures

L'élément inverseur 39 de chaque circuit de démodulation $35_i$ (cf. figure 7) inverse le signal reçu afin de délivrer un signal dont l'amplitude est de la forme

$$A = K_o \times d \qquad (formule \ 6),$$

et qui est ensuite soumis à une amplification par l'amplificateur 40. Le signal final est directement exploitable, car donnant directement la valeur de "d" représentative de la position suivant l'axe vertical de la tête portée par le bilame correspondant.

L'élément inverseur 39 et l'amplificateur 40 sont représentés incorporés dans le circuit de démodulation $35_i$ pour des raisons de clarté et de simplification, bien que strictement parlant, ces deux éléments ne soient pas directement liés à l'opération de démodulation.

Afin de tenir compte des variations de permitivité de l'air, (suite à un changement de température, salinité, hygrométrie), dont la valeur $\epsilon$ intervient dans la formule du calcul de la distance "d" séparant les armatures, le dispositif selon l'invention comprend avantageusement un circuit de correction, décrit ci-après en relation avec les figures 9 et 10. Celles-ci montrent un exemple de réalisation, pourvu du circuit de correction, et correspondant respectivement aux réalisations des figures 4 et 7.

Le circuit de correction (cf figure 9) comporte une capacité de référence $C_{ref}$ et un circuit de démodulation 43, dont une première entrée $e_1$ reçoit le signal de détection porteur (depuis le générateur 33) et dont la seconde entrée $e_2$ est reliée à la première armature de la capacité de référence ; la seconde armature de cette dernière est reliée par le déphaseur DPHI au générateur 33.

Le circuit 43 comporte un multiplieur 36, un amplificateur 37 et un filtre passe-bas 38, ces trois éléments étant similaires à ceux des circuits de démodulation $35_i$ associée à chaque capacité de mesure $C_m$. La sortie du circuit 43 est reliée à une entrée d'ajustement de chacun des éléments inverseurs 39 des circuits $35_i$ respectifs.

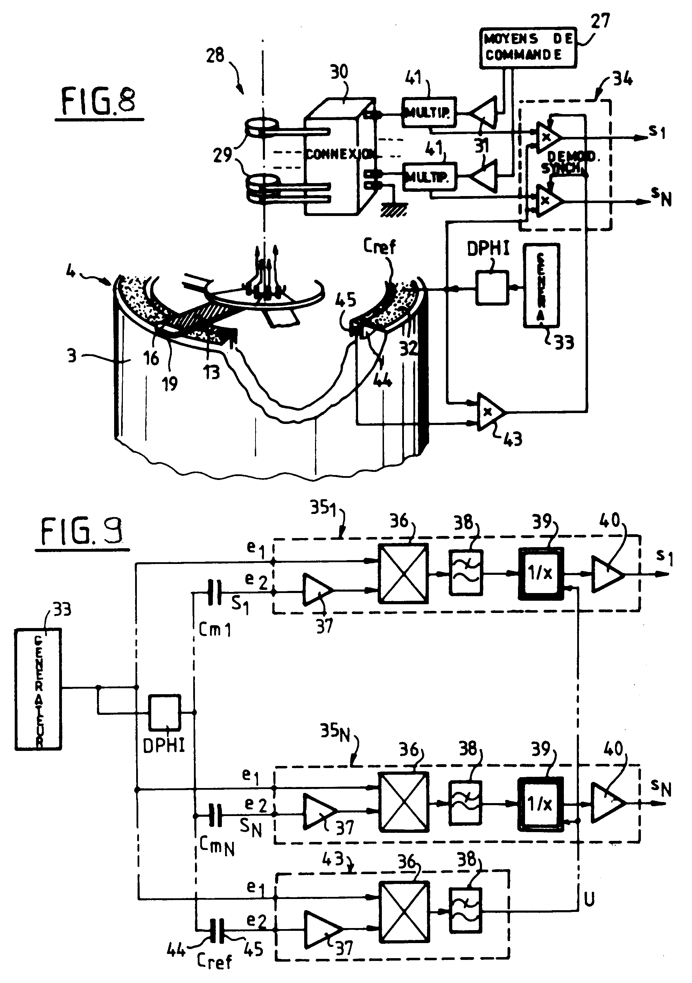

La figure 8 montre un exemple de réalisation de la capacité de référence $C_{ref}$ comprenant en deux armatures cylindriques concentriques et coaxiales au tambour. La première armature 44 est constituée d'une bande cylindrique de diamètre égal au diamètre intérieur de l'armature annulaire 32 des capacités de mesure $C_m$ ; cette armature 44 est constituée par un rabat (dans un plan de section axiale) de l'armature annulaire 32. La seconde armature cylindrique 45 est placée en regard de l'armature 44, à une distance radiale donnée.

A l'instar des N capacités de mesure $C_m$, le signal modulé, issu de l'armature 45 de la capacité de référence $C_{ref}$, subit une démodulation synchrone en amplitude par le circuit 43 qui délivre un signal de correction appliqué à chacun des éléments inverseurs 39. Est ainsi introduit un facteur correctif dans la valeur de $\epsilon$ intervenant dans la formule (5), afin de tenir compte des variations de $\epsilon$ de l'air ambiant dans lequel baignent les capacités de mesure $C_m$.

Avantageusement, le signal portant l'information relative à la distance d séparant le bilame de l'armature de référence est injecté dans les moyens 27 de commande de fléchissement pour former une boucle d'asservissement, comme décrit sur la figure 10, montrant une forme de réalisation similaire à la variante de la figure 4. Les éléments similaires de chacune des figures 4 et 10 portent les mêmes références.

Le condensateur Cm représente le condensateur variable de mesure. Les sorties $s_1$, ..$s_N$ des moyens de démodulation sont reliées aux moyens 27 de commande de fléchissement des bilames, de manière que chaque signal de fléchissement (issus des moyens 27) soit corrigé par le signal de sortie incorporant la position effective du bilame.

**Revendications**

1. Dispositif pour détecter la position d'une pluralité de têtes (19, 20, 21) d'enregistrement/lecture de bande (7), destiné à un appareil d'enregistrement/ lecture à têtes tournantes comprenant:
   - un tambour cylindrique (1) contre la surface duquel s'enroule hélicoïdalement ladite bande (7), ledit tambour (1) présentant une fente (4) dans un plan équatorial dudit tambour (1);
   - des moyens de commande (27) pour générer des signaux de fléchissement ;
   - une pluralité de supports (13, 14, 15) allongés répartis angulairement autour de l'axe du tambour (1), chaque support (13, 14, 15) :
   étant solidaire d'un élément tournant (5) monté en rotation dans ledit plan équatorial autour dudit axe du tambour (1),
   adapté à recevoir à son extrémité libre une tête d'enregistrement/lecture (19, 20, 21) ; et
   susceptible de fléchir, selon une direction (f) transversale à la direction de déplacement relatif tête/bande, en réponse à un signal de fléchissement engendré par lesdits moyens de commande (27), de manière à déplacer la tête (19, 20, 21) dans ladite direction transversale (f) ;
   ledit dispositif comprenant :
   - pour chaque support, un capteur (Cm) de position à capacité électrique variable comprenant :
   une armature fixe (32), annulaire, solidaire du tambour (1),
   coaxiale à celui ci et commune à tous les capteurs de position; et
   une armature mobile (24) solidaire du support (13, 14, 15) correspondant ;
   - des moyens de mesure (33, 34, 35) sensibles à la réponse des capteurs de position et adaptés à fournir des signaux représentatifs de la position de chaque support, et par conséquent de chaque tête.

2. Dispositif selon la revendication 1, caractérisé en ce que chaque support est formé d'un bilame piézoélectrique (13, 14, 15) dont une face constitue ladite armature mobile (24) du capteur de position

EP 0 279 132 B1

(Cm) correspondant.

3. Dispositif selon l'une des revendications 1 ou 2, caractérisé en ce que les moyens de mesure comportent un générateur (33) de signal électrique alternatif d'entrée "porteur" appliqué à l'une des armatures de chaque capteur (Cm) par l'intermédiaire d'un amplificateur (31), et des moyens de démodulation (34) dont l'une des entrées est reliée à la sortie du générateur et dont l'autre entrée est reliée à l'autre armature de chaque capteur.

4. Dispositif selon l'une des revendications précédentes, caractérisé en ce que l'armature fixe (32) est constituée d'une couche métallique disposée sur l'une des faces inférieure ou supérieure de ladite fente (4), et en regard du trajet des supports (13, 14, 15).

5. Dispositif selon l'une des revendications 3 ou 4, caractérisé en ce que le générateur (33) engendre autant de signaux de fréquence différente que de supports et appliqués chacun à un support respectif, et en ce que les moyens de démodulation (34) comprennent un circuit de démodulation (35) pour la fréquence associée à chaque support (13, 14, 15).

6. Dispositif selon l'une des revendications 3 ou 4, caractérisé en ce que le générateur (33) engendre un signal d'entrée porteur de fréquence donnée et est relié à l'armature fixe (32), les moyens de démodulation (35) comprenant un circuit de démodulation (35i) pour chaque support (13, 14, 15).

7. Dispositif selon la revendication 6, caractérisé en ce que les moyens de mesure comprennent un circuit de multiplexage (MULTIPL) en fréquence permettant de transmettre, via les moyens de transmission (28, 29) du signal de fléchissement, dans un sens le signal de fléchissement vers le support, et dans le sens inverse le signal de sortie issu de l'armature mobile (24) et contenant l'information de position de cette dernière, vers le circuit de démodulation (35i) correspondant.

8. Dispositif selon l'une des revendication 5 à 7, caractérisé en ce que les moyens de mesure (33, 34, 35) comprennent un circuit déphaseur de 90° (DPHI) auquel est appliqué le signal d'entrée porteur ou le signal de sortie modulé.

9. Dispositif selon l'une des revendications précédentes, caractérisé en ce qu'il comprend un circuit de correction (43) afin de tenir compte des variations de la permitivité de l'air ambiant, comportant une capacité de référence (Cref) placée au voisinage desdits capteurs de position (Cm), ledit circuit de correction étant relié auxdits moyens de mesure (34) de manière à délivrer un signal de correction appliqué à ces derniers.

**Claims**

1. A device for detecting the positions of a plurality of recording/read heads (19, 20, 21) for use with a tape (7), said device being for use in rotating-head recording/read apparatus comprising:

    a cylindrical drum (1) against whose surface said tape (7) is helically wound, said drum (1) having a slot (4) in an equatorial plane of said drum (1);

    control means (27) for generating bending signals; and

    a plurality of elongate supports (13, 14, 15) angularly distributed around the axis of the drum (1), each support (13, 14, 15):

    being secured to a rotary component (5) mounted to rotate in said equatorial plane about the said axis of the drum (1); being adapted to receive a recording/read head (19, 20, 21) at its free end; and being capable of responding to a bending signal generated by said control means (7), by bending in a direction (f) transverse to the direction of relative displacement between the head and the tape, in such a manner as to displace the head (19, 20, 21) in said transverse direction (f);

    said device comprising:

    for each support, a variable capacitance position sensor (Cm) comprising:

    both an annular fixed plate (32) secured to the drum (1), coaxial therewith, and common to all of the position sensors; and a moving plate (24) secured to the corresponding support (13, 14, 15);

    and measuring means (33, 34, 35) sensitive to the response of the position sensors and adapted to provide signals representative of the position of each support, and consequently of each head.

9

**2.** A device according to claim 1, characterized in that the head support comprises a piezoelectric bimorph strip (13, 14, 15) having one of its faces constituting the moving plate (24) of the variable capacitance ($C_m$).

**3.** A device according to claim 1 or 2, characterized in that the measurement means comprise an alternating electric signal generator (33) for generating a "carrier" input alternating electrical signal which is applied to one of the plates of the variable capacitance ($C_m$) by means of an amplifier (31), and demodulation means (34) having one input connected to the output from the generator and having its other input connected to the other plate of the variable capacitance.

**4.** A device according to any preceding claim, characterized in that the fixed plate (32) is constituted by a metal layer which is disposed on one of the bottom or top faces of said slot (4), and facing the path of the rotating head support (13, 14, 15).

**5.** A device according to claim 3 or 4, characterized in that the generator (33) generates as many signals at different frequencies as there are head supports and applies each of said signals to a respective one of the supports, and in that the demodulation means (34) comprise a demodulation circuit (35) for each frequency associated with a head support (13, 14, 15).

**6.** A device according to claim 3 or 4, characterized in that the generator (33) generates a carrier input signal of given frequency and is connected to the fixed plate (32), the demodulation means (35) including a demodulation circuit ($35_i$) for each head support (13, 14, 15).

**7.** A device according to claim 6, characterized in that the measurement means include a frequency multiplexer circuit (MULTIPL) for transmitting the bending signal to the support in one direction via bending signal transmission means (28, 29) and the output signal from the moving plate (24) in the opposite direction via said bending signal transmission means, said output signal containing position information relating to the moving plate for onward transmission to the corresponding demodulation circuit ($35_i$).

**8.** A device according to any one of claims 5 to 7, characterized in that the measurement means (33, 34, 35) comprise a 90° phase shifter circuit (DPHI) to which the carrier input signal or the modulated output signal is applied.

**9.** A device according to any preceding claim, characterized in that it includes a correction circuit (43) for taking account of variations in the permitivity of ambient air, said circuit comprising a reference capacitance ($C_{ref}$) placed in the vicinity of the variable capacitance ($C_m$), said circuit being connected to said measurement means (34) in such a manner as to deliver a correction signal which is applied thereto.

**Patentansprüche**

**1.** Einrichtung zum Erfassen der Position einer Mehrzahl von Schreib-/Leseköpfen (19, 20, 21) für ein Band (7), die für ein Schreib-/Lesegerät mit rotierenden Köpfen bestimmt ist, das versehen ist mit:
- einer zylindrischen Trommel (1), deren Oberfläche vom Band (7) spiralförmig umschlungen wird, wobei die Trommel (1) in einer Äquatorialebene einen Spalt (4) aufweist;
- Steuermitteln (27) zum Erzeugen von Biegesignalen; und
- einer Mehrzahl von länglichen Trägern (13, 14, 15), die in Umfangsrichtung um die Mittelachse der Trommel (1) verteilt sind, wobei jeder Träger (13, 14, 15)

mit einem drehbaren Element (5) verbunden ist, das in der Äquatorialebene um die Mittelachse der Trommel (1) drehbar angebracht ist,

so beschaffen ist, das er an seinem freien Ende einen Schreib-/Lesekopf (19, 20, 21) aufnimmt, und

dazu geeignet ist, sich aufgrund eines von den Steuermitteln (27) erzeugten Biegesignals in einer Richtung (f) quer zur Richtung der relativen Kopf-/Band-Verschiebung zu biegen, derart, daß der Kopf (19, 20, 21) in der Querrichtung (f) verschoben wird;

wobei die Einrichtung umfaßt:
- für jeden Träger einen Positions-Meßwertaufnehmer (Cm) mit variabler elektrischer Kapazität, der versehen ist mit:

einer festen, ringförmigen Ummantelung (32), die mit der Trommel (1) verbunden ist, zu dieser koaxial ist und allen Positions-Meßwertaufnehmern gemeinsam ist, und einer beweglichen Ummantelung (24), die mit dem jeweiligen Träger (13, 14, 15) verbunden ist; und

- Meßmitteln (33, 34, 35), die auf die Reaktion der Positions-Meßwertaufnehmer ansprechen und so beschaffen sind, daß sie Signale liefern, die die Position eines jeden Trägers und folglich eines jeden Kopfes darstellen.

2. Einrichtung gemäß Anspruch 1, dadurch gekennzeichnet, daß jeder Träger aus einem piezoelektrischen Bimetall (13, 14, 15) gebildet ist, von dem eine Seite die bewegliche Ummantelung (24) des entsprechenden Positions- Meßwertaufnehmers (Cm) bildet.

3. Einrichtung gemäß einem der Ansprüche 1 oder 2, dadurch gekennzeichnet, daß die Meßmittel einen Generator (33) für ein elektrisches "Trägerfrequenz"-Eingangswechselsignal, das über einen Zwischenverstärker (31) in eine der Ummantelungen eines jeden Meßwertaufnehmers (Cm) eingegeben wird, und Demodulationsmittel (34) aufweisen, von denen einer ihrer Eingänge mit dem Ausgang des Generators verbunden ist und von denen der Eingang mit der anderen Ummantelung eines jeden Meßwertaufnehmers verbunden ist.

4. Einrichtung gemäß einem der vorangehenden Ansprüche, dadurch gekennzeichnet, daß die feste Ummantelung (32) von einer metallischen Schicht gebildet ist, die entweder an der Unterseite oder an der Oberseite des Spaltes (4) und gegenüber der Bahn der Träger (13, 14, 15) angeordnet ist.

5. Einrichtung gemäß einem der Ansprüche 3 oder 4, dadurch gekennzeichnet, daß der Generator (33) so viele Signale mit unterschiedlicher Frequenz erzeugt wie Träger vorhanden sind, die jeweils in einen entsprechenden Träger eingegeben werden, und daß die Demodulationsmittel (34) eine Demodulationsschaltung (35) für die einem jeden Träger (13, 14, 15) zugeordnete Frequenz aufweisen.

6. Einrichtung gemäß einem der Ansprüche 3 oder 4, dadurch gekennzeichnet, daß der Generator (33) ein Trägerfrequenz-Eingangssignal von gegebener Frequenz erzeugt und mit der festen Ummantelung (32) verbunden ist, wobei die Demodulationsmittel (35) für jeden Träger (13, 14, 15) eine Demodulationsschaltung (35i) aufweisen.

7. Einrichtung gemäß 6, dadurch gekennzeichnet, daß die Meßmittel eine Frequenzmultiplexschaltung (MULTIPL) aufweisen, die es ermöglichen, über Biegesignal-Übertragungsmittel (28, 29) in Richtung zum Träger das Biegesignal und in entgegengesetzter Richtung zur entsprechenden Demodulationsschaltung (35i) das von der beweglichen Ummantelung (24) ausgegebene Ausgangssignal, das die Information bezüglich der Position der letzteren enthält, zu übertragen.

8. Einrichtung gemäß einem der Ansprüche 5 bis 7, dadurch gekennzeichnet, daß die Meßmittel (33, 34, 35) eine Schaltung für eine Phasenverschiebung um 90° (DPHI) aufweisen, in die das Trägerfrequenz-Eingangssignal oder das modulierte Ausgangssignal eingegeben werden.

9. Einrichtung gemäß einem der vorangehenden Ansprüche, dadurch gekennzeichnet, daß sie eine Korrekturschaltung (43) umfaßt, um den Schwankungen der Permittivität der umgebenden Luft Rechnung zu tragen, wobei die Korrekturschaltung (43) eine in der Umgebung der Positions-Meßwertaufnehmer (Cm) angeordnete Bezugskapazität (Cref) aufweist und mit den Meßmitteln (34) verbunden ist, derart, daß sie ein in diese letzteren eingegebenes Korrektursignal liefert.

FIG.1

FIG.2

FIG. 3

FIG. 4

FIG.5

FIG.10

## FIG.6A

## FIG.6B

## FIG.7

## FIG.8

## FIG.9